# EUROPÄISCHE PATENTANMELDUNG

(11) **EP 2 826 646 A1**
(43) Veröffentlichungstag der Anmeldung: **21.01.2015**
(21) Anmeldenummer: 14175598.3
(22) Anmeldetag: 03.07.2014
(51) Int. Cl.: B60G 17/0195, B60G 17/016, B60W 30/12, B60G 17/04

(54) **Betriebsverfahren für ein aktives Fahrwerk eines Kraftfahrzeugs**

(30) Priorität: 19.07.2013 DE 102013012124
(71) Anmelder: AUDI AG, 85045 Ingolstadt (DE)
(72) Erfinder: Müller, Christoph, 97723 Oberthulba (DE)

(57) **Zusammenfassung**

Betriebsverfahren für ein eine festgelegte Achskinematik aufweisendes aktives Fahrwerk eines Kraftfahrzeugs (1), das mittels einer Steuerungseinrichtung (6) so gesteuert wird, dass ein Giermoment erzeugt wird, wobei das aktive Fahrwerk durch die Steuerungseinrichtung (6) so gesteuert wird, dass ein Wankwinkel gestellt wird, der durch die dadurch verursachte Änderung des eingestellten Sturzes und der eingestellten Spur der Räder (4, 5) das gewünschte Giermoment erzeugt.

## Beschreibung

Die Erfindung betrifft ein Betriebsverfahren für ein eine festgelegte Achskinematik aufweisendes aktives Fahrwerk eines Kraftfahrzeugs, das mittels einer Steuerungseinrichtung so gesteuert wird, dass ein Giermoment erzeugt wird.

Es ist bereits bekannt, bei dem Betrieb eines Kraftfahrzeugs aktiv ein Giermoment zu erzeugen, um z. B. die Spurführung oder den Geradeauslauf des Fahrzeugs zu beeinflussen oder zu verbessern. Ein Giermoment, d. h. eine Drehung des Fahrzeugs um die Hochachse, kann auf unterschiedliche Arten erzeugt werden.

Bei einer dynamischen Lenkung wird ein vom Fahrer spürbares Handlenkmoment erzeugt, die Stärke dieses Eingriffs ist allerdings durch Zulassungsvorschriften limitiert. Teilweise wird die Tatsache, dass der Eingriff vom Fahrer spürbar ist, als nachteilig angesehen.

Es ist auch bekannt, Radbremsen einseitig zu betätigen, um das gewünschte Giermoment zu erzeugen. Ein derartiger Bremseingriff ist jedoch nicht über einen längeren Zeitraum möglich, da sich ansonsten die Effizienz verschlechtert und der Bremsenverschließ erhöht, zudem wird dabei permanent Wärme erzeugt.

Es ist auch bereits vorgeschlagen worden ein aktives Fahrwerk eines Kraftfahrzeugs diagonal zu verspannen. Dies führt allerdings zu einer verstärkten Belastung der beiden diagonal gegenüberliegenden verspannten Räder, was in einem höheren Energieverbrauch resultiert. Zudem verringert sich in diesem Zustand der Grip des Kraftfahrzeugs, da bei einer Vollbremsung die insgesamt übertragbare Kraft verringert ist.

In der DE 10 2004 007 549 A1 wird ein Verfahren zum Betrieb eines aktiven Fahrwerksystems vorgeschlagen, um ein Giermoment zu erzeugen. Dazu wird die Radaufstandskraft verändert, um unter Ausnutzung der Vorspur des Rades eines Seitenkraft zu erzeugen. Diese Funktion kann in einem Seitenwindassistenten implementiert sein.

In dem Artikel "Simulationsumgebung zur Untersuchung aktiver Wankstabilisierung in Verbindung mit einer Fahrdynamikregelung, Andreas Gärtner, Martine Saeger, Institut für Kraftfahrwesen der RWTH Aachen, 11. November 2003" wird vorgeschlagen, ein Giermoment durch eine Umverteilung der Wankabstützung zu erzeugen. Dieses Verfahren zur Erzeugung eines Giermoments beruht auf einer degressiven Radlastkennlinie, die bei unterschiedlicher Wankabstützung zu einem untersteuernden oder einem übersteuernden Fahrverhalten führt, wodurch das Giermoment erzeugt wird.

Alle bekannten Verfahren oder Maßnahmen zur Erzeugung eines Giermoments sind mit Nachteilen behaftet, entweder da sie einen erhöhten Energieverbrauch verursachen oder aus Sicherheitsgründen bedenklich sind.

Der Erfindung liegt daher die Aufgabe zugrunde, ein Betriebsverfahren für ein aktives Fahrwerk eines Kraftfahrzeugs anzugeben, durch das ein Giermoment erzeugt wird, das weder im Hinblick auf den Energieverbrauch noch aus Sicherheitsgründen Nachteile mit sich bringt.

Zur Lösung dieser Aufgabe ist bei einem Betriebsverfahren der eingangs genannten Art erfindungsgemäß vorgesehen, dass das aktive Fahrwerk durch die Steuerungseinrichtung so gesteuert wird, dass ein Wankwinkel gestellt wird, der durch die dadurch verursachte Änderung des eingestellten Sturzes und der eingestellten Spur der Räder das gewünschte Giermoment erzeugt.

Erfindungsgemäß wird der Effekt ausgenutzt, dass die Achskinematik eines Fahrwerks eines Kraftfahrzeugs so ausgelegt ist, dass durch das Erzeugen eines Wankwinkels ein Giermoment erzeugt wird. Dieser Effekt beruht auf der Spur und dem Sturz bzw. auf einem eingestellten Verlauf von Spur und Sturz in Abhängigkeit des Wankwinkels. Dieser Effekt beruht auf der Auslegung der Achskinematik und wurde ursprünglich zur Stabilisierung des Kraftfahrzeugs bei hochdynamischen Manövern implementiert. Durch die Erfindung wird dieser Effekt für einen anderen Zweck ausgenutzt, nämlich zum Erzeugen eines Giermoments, das sich automatisch beim Erzeugen des Wankwinkels einstellt. Bei dem erfindungsgemäßen Verfahren wird somit unabhängig von der aktuellen Querbeschleunigung und unabhängig von der Fahrsituation mittels des aktiven Fahrwerks ein Wankwinkel aufgebaut. Vorzugsweise entspricht der Betrag des Wankwinkels der Größe des gewünschten Giermoments. Das erfindungsgemäße Verfahren weist den Vorteil auf, dass ein Giermoment lediglich durch bereits vorhandene Aktoren aufgebaut werden kann. Dementsprechend kann das erfindungsgemäße Betriebsverfahren besonders einfach umgesetzt werden. Durch das aufgebaute Giermoment können diverse Funktionen unterstützt werden, beispielsweise ein gesteuerter Geradeauslauf oder eine Spurmittenführung.

Das erfindungsgemäße Verfahren weist den Vorteil auf, dass der durch die Steuerungseinrichtung vorgenommene Eingriff durch Erzeugen des Wankwinkels bzw. des Giermoments vom Fahrer unbemerkt bleibt. Zudem kann der Wankwinkel bzw. das Giermoment dauerhaft erzeugt werden, ohne dass sich dadurch Nachteile ergeben. Ein weiterer Vorteil ist daran zu sehen, dass die Erzeugung des Wankwinkels bzw. des Giermoments auch aus Sicherheitsgründen unbedenklich ist und die Energieeffizienz nicht beeinträchtigt.

Schließlich kann das erfindungsgemäße Betriebsverfahren einfach umgesetzt werden, da dazu lediglich ein herkömmliches aktives Fahrwerk benötigt wird, das typischerweise eine Luftfederung und aktive Stabilisatoren aufweist.

Bei der Umsetzung des erfindungsgemäßen Betriebsverfahrens ist es besonders vorteilhaft, wenn der Wankwinkel durch das Stellen von Vertikalkräften zwischen Radträger und Chassis erzeugt wird, wobei die Vertikalkräfte der rechten und der linken Seite unterschiedlich groß sind. Diese Vertikalkräfte zwischen Radträger und Chassis werden bei dem erfindungsgemäßen Verfahren durch das aktive Fahrwerk erzeugt. Das aktive Fahrwerk weist dazu Aktoren wie eine Luftfederung, aktive Stabilisatoren und dergleichen auf.

Das erfindungsgemäße Betriebsverfahren kann so implementiert sein, dass die Erzeugung des Giermoments durch ein Fahrerassistenzsystem ausgelöst wird, insbesondere durch ein Geradeauslaufprogramm oder eine Spurmittenführung. Das Fahrerassistenzsystem kann somit die Erzeugung des Giermoments auslösen, die erfindungsgemäß durch Stellen des Wankwinkels erzeugt wird.

Bei dem erfindungsgemäßen Verfahren wird es besonders bevorzugt, dass der Betrag des Wankwinkels 0,5° bis 1,5° beträgt, vorzugsweise kann der Wankwinkel näherungsweise 1° betragen. Dieser vergleichsweise geringe Wankwinkel ist bereits ausreichend, um das gewünschte Giermoment zu erzeugen.

Weitere Vorteile und Einzelheiten der Erfindung werden nachfolgend anhand eines Ausführungsbeispiels unter Bezugnahme auf die Zeichnung erläutert.

Die Zeichnungen sind schematische Darstellungen und zeigen:
- Fig. 1: ein Kraftfahrzeug, das für die Durchführung des erfindungsgemäßen Betriebsverfahrens geeignet ist;
- Fig. 2 und 3: den Verlauf des Spurwinkels über der Einfederung;
- Fig. 4: die an den Rädern auftretenden Kräfte bei einem Wankwinkel von 0°; und
- Fig. 5: die an den Rädern auftretenden Radkräfte bei einem Wankwinkel von 5°.

Das in der Figur gezeigte Kraftfahrzeug 1 umfasst ein aktives Fahrwerk mit Aktoren 2, 3, die die Federung und die Dämpfung der Räder 4, 5 des Kraftfahrzeugs 1 beeinflussen können. Jeder Aktor 2, 3 umfasst einen pneumatischen oder hydropneumatischen Zylinder, um ein gewünschtes Federverhalten zu erzeugen. Zusätzlich ist ein steuerbarer Schirmungsdämpfer vorgesehen, um Schwingungsenergie in Wärme umzusetzen.

Die Aktoren 2, 3 des aktiven Fahrwerks sind mit einer Steuerungseinrichtung 6 gekoppelt, durch die die Aktoren 2, 3 gesteuert werden.

Das Kraftfahrzeug 1 weist ein Fahrerassistenzsystem in Form einer Spurmittenführung auf. Wenn das Fahrerassistenzsystem feststellt, dass zur Beeinflussung des Fahrverhaltens ein Giermoment erforderlich ist, aktiviert es die Steuerungseinrichtung 6. Diese steuert die Aktoren 2, 3, die den Rädern 4, 5 zugeordnet sind, so an, dass ein Wankwinkel gestellt, d. h. erzeugt wird. Selbstverständlich ist die Steuerungseinrichtung 6 mit allen vier Rädern des Kraftfahrzeugs 1 gekoppelt, so dass alle vier Räder ihren Beitrag zum Erzeugen des gewünschten Wankwinkels leisten. Durch diese gezielte Beeinflussung und Ansteuerung des aktiven Fahrwerks mittels der Aktoren 2, 3 wird ein Wankwinkel, d. h. eine Drehbewegung des Kraftfahrzeugs 1 um seine Längsachse erzeugt. In dem dargestellten Ausführungsbeispiel beträgt der Wankwinkel 1 °.

Die Kinematik des aktiven Fahrwerks des Kraftfahrzeugs 1 ist so ausgelegt, dass ein erzeugter Wankwinkel automatisch ein Giermoment erzeugt. Dieser Effekt wird durch den eingestellten Sturz und die eingestellte Spur der Räder 4, 5 bewirkt. Das durch den erzeugten Wankwinkel erzeugte Giermoment ist so gering, dass es vom Fahrer nicht oder zumindest nicht als störend wahrgenommen wird.

Durch dieses Verfahren kann mittels Ansteuerung des aktiven Fahrwerks durch ein Fahrerassistenzsystem die gewünschte Beeinflussung des Fahrverhaltens des Kraftfahrzeugs 1 erreicht werden. Das Fahrerassistenzsystem aktiviert dabei die Steuerungseinrichtung 6, die wiederum die Aktoren 2, 3 der Räder 4, 5 beeinflusst.

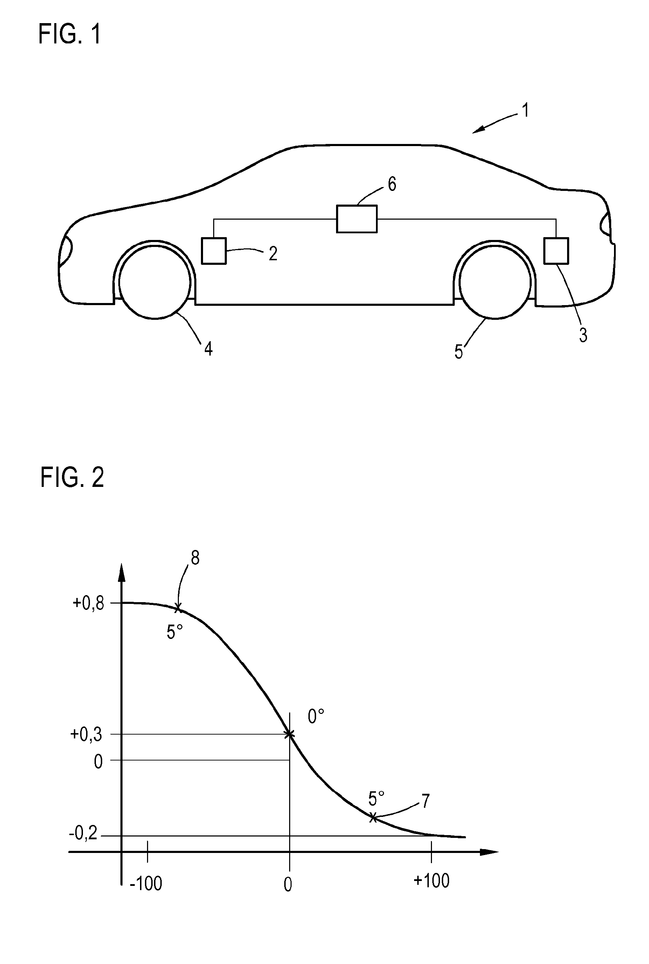

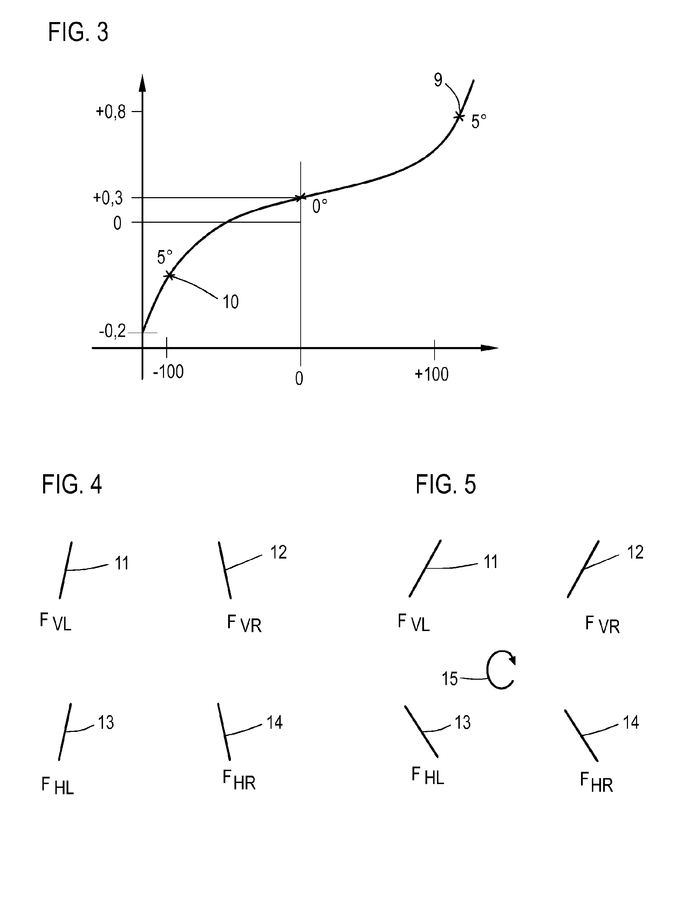

Die Fig. 2 und 3 zeigen den Verlauf des Spurwinkels über dem Federweg, wobei Fig. 2 diesen Zusammenhang für die Vorderachse und Fig. 3 für die Hinterachse zeigt.

Auf der x-Achse von Fig. 2 ist ausgehend von einem neutralen Zustand, bei dem keine Einfederung vorhanden ist, ein Bereich von + 100 mm bis - 100 mm gezeigt. Eine positive Einfederung bedeutet, dass die Feder am Rad eingefedert ist, umgekehrt bedeutet eine negative Einfederung, dass die Feder ausgefedert ist. Auf der vertikalen Achse ist die Spur, genauer gesagt der Spurwinkel, aufgetragen. Wenn keine Einfederung vorhanden ist, beträgt die Spur in dem dargestellten Ausführungsbeispiel 0,3°. In diesem Zustand beträgt der Wankwinkel 0°. Ausgehend von dieser Neutrallage sind in Fig. 2 zwei Punkte dargestellt, die einem Wankwinkel von + 5° entsprechen. Der Punkt 7 ist dem rechten Rad zugeordnet, der Punkt 8 dem linken Rad. Aus Fig. 2 ergibt sich, dass jedem Einfederungszustand eine bestimmte Spur zugeordnet ist, jedem aus Einfederung und Spur bestehenden Wirtepaar ist wiederum ein bestimmter Wankwinkel zugeordnet. Eine Vergrößerung oder Verkleinerung der Einfederung bewirkt eine Änderung der Spur und dadurch eine Änderung des Wankwinkels. Der in Fig. 2 gezeigte Bereich für den Wankwinkel zwischen 0° und 5° ist sehr groß, in der Praxis genügt bereits eine Änderung des Wankwinkels um ca. 1°, um den gewünschten Effekt der Erzeugung eines Giermoments auszulösen.

Fig. 3 ist eine ähnliche Darstellung wie Fig. 2, wobei in Fig. 3 der Zusammenhang zwischen Federweg und Spurwinkel für die Hinterachse dargestellt ist. In Fig. 3 erkennt man, dass ausgehend von einer neutralen Lage eine positive Einfederung zu einer Vergrößerung des Spurwinkels führt, dadurch entsteht ein Wankwinkel, am Punkt 9 beträgt der Wankwinkel 5°. Umgekehrt bewirkt eine negative Einfederung eine Verringerung des Spurwinkels, wobei der Punkt 10 einem Wankwinkel von 5° entspricht.

Die Fig. 4 und 5 zeigen den Einfluss eines veränderten Wankwinkels. In Fig. 4 sind schematisch vier Räder 11, 12, 13, 14 eines Fahrzeugs dargestellt. Wenn der Wankwinkel 0° beträgt, sind die an den Rädern 11, 12 wirkenden Seitenkräfte F_{fl} und F_{fr} gleichgroß und einander entgegengesetzt gerichtet. Analog sind die an den Rädern 13, 14 der Hinterachse wirkenden Seitenkräfte Fₕₗ und Fₕᵣ gleichgroß und entgegengesetzt zueinander gerichtet. Diese Seitenkräfte werden durch die Spurwinkel verursacht, die wiederum abhängig von der Einfederung (Federweg) sind, wie in den Fig. 2 und 3 gezeigt ist. In dem in Fig. 4 gezeigten Zustand heben sich sämtliche Seitenkräfte auf, der Wankwinkel beträgt 0°, somit ist kein Giermoment vorhanden.

Fig. 5 ist eine ähnliche Darstellung wie Fig. 4, für die Räder 11, 12, 13, 14 sind jeweils die wirkenden Seitenkräfte dargestellt. Um einen positiven Wankwinkel von z. B. + 5° zu erzeugen, wird das Fahrwerk so gesteuert, dass die linke Seite ausfedert und die rechte Seite einfedert. Dadurch ergibt sich bei dem Rad 11 (vorne links) ein größerer Spurwinkel. Bei dem Rad 12 (vorne rechts) ergibt sich ebenfalls ein größerer Spurwinkel. Bei dem Rad 13 (hinten links) ergibt sich ein kleinerer Spurwinkel, ebenso bei dem Rad 14 (hinten rechts). Das Giermoment ergibt sich als Summe der an den Rädern 11, 12, 13, 14 wirkenden Kräfte, jeweils multipliziert mit dem wirkenden Hebelarm. Dementsprechend ergibt sich bei einem Wankwinkel von + 5° das Giermoment 15 als Resultat des aufgebrachten Wankwinkels und der zugehörigen, sich einstellenden Spurwinkel.

## Patentansprüche

1. Betriebsverfahren für ein eine festgelegte Achskinematik aufweisendes aktives Fahrwerk eines Kraftfahrzeugs, das mittels einer Steuerungseinrichtung so gesteuert wird, dass ein Giermoment erzeugt wird,
**dadurch gekennzeichnet,**
**dass** das aktive Fahrwerk durch die Steuerungseinrichtung so gesteuert wird, dass ein Wankwinkel gestellt wird, der durch die dadurch verursachte Änderung des eingestellten Sturzes und der eingestellten Spur der Räder das gewünschte Giermoment erzeugt.

2. Betriebsverfahren nach Anspruch 1,
**dadurch gekennzeichnet,**
**dass** der Wankwinkel durch das Stellen von Vertikalkräften zwischen Radträger und Chassis erzeugt wird, wobei die Vertikalkräfte der rechten und der linken Seite unterschiedlich groß sind.

3. Betriebsverfahren nach Anspruch 1 oder 2,
**dadurch gekennzeichnet,**
**dass** die Erzeugung des Giermoments durch ein Fahrerassistenzsystem ausgelöst wird, insbesondere durch ein Geradeauslaufprogramm oder eine Spurmittenführung.

4. Betriebsverfahren nach einem der vorangehenden Ansprüche,
**dadurch gekennzeichnet,**
**dass** der Betrag des Wankwinkels 0,5° bis 1,5°, vorzugsweise näherungsweise 1° beträgt.
